(19) Europäisches Patentamt / European Patent Office / Office européen des brevets

(11) **EP 1 811 052 A1**

(12) **EUROPEAN PATENT APPLICATION**
published in accordance with Art. 158(3) EPC

(43) Date of publication:
**25.07.2007 Bulletin 2007/30**

(51) Int Cl.:
*C22C 38/00* (2006.01)    *C21D 9/00* (2006.01)
*C22C 38/34* (2006.01)    *F16C 33/32* (2006.01)
*F16C 33/62* (2006.01)    *F16H 15/38* (2006.01)

(21) Application number: **05793472.1**

(22) Date of filing: **17.10.2005**

(86) International application number:
**PCT/JP2005/019036**

(87) International publication number:
**WO 2006/041184 (20.04.2006 Gazette 2006/16)**

(84) Designated Contracting States:
**DE FR GB SE**

(30) Priority: **15.10.2004 JP 2004301684**

(71) Applicant: **JTEKT Corporation**
**Osaka-shi**
**Osaka 542-8502 (JP)**

(72) Inventors:
• **HARADA, Hisashi**
**c/o JTEKT Corporation**
**Osaka-shi,**
**Osaka 5428502 (JP)**

• **ONO, Yoshihiro**
**c/o JTEKT Corporation**
**Osaka-shi,**
**Osaka 5428502 (JP)**

(74) Representative: **TER MEER - STEINMEISTER & PARTNER GbR**
**Artur-Ladebeck-Strasse 51**
**33617 Bielefeld (DE)**

(54) **ROLL/SLIDE MEMBER, TOROIDAL CONTINUOUSLY VARIABLE TRANSMISSION UTILIZING THE SAME, AND PROCESS FOR PRODUCING ROLL/SLIDE MEMBER**

(57) A rolling, sliding member is formed from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities. The average grain size of spheroidal carbide is 0.6 μm or less, and the spheroidal carbide content is 6.0% or less as percent area. In a toroidal-type continuously variable transmission, the rolling, sliding member is used as at least either disks 4 and 9 each having a concave raceway surface on a side surface thereof, or rollers 16 rolling on raceway surfaces 4b and 9b of the disks 4 and 9. The toroidal-type continuously variable transmission using the rolling, sliding member of the present invention exhibits long life.

Fig.1

**Description**

TECHNICAL FIELD

The present invention relates to a rolling, sliding member, to a toroidal-type continuously variable transmission using the same, and to a method of manufacturing the rolling, sliding member.

A rolling, sliding member appearing herein and in the appended claims encompasses a member which performs pure rolling contact; a member which performs pure sliding contact; and a member which performs mixed contact of rolling contact and sliding contact.

BACKGROUND ART

Known toroidal-type continuously variable transmissions for use in vehicles; for example, automobiles, are of a full toroidal type and a half toroidal type. In these toroidal-type continuously variable transmissions, a contact portion between an input/output disk and a roller, which collectively serve as a rolling, sliding member serving as a torque transmission member, is subjected to high temperature (100°C or higher) and high surface pressure (thousands of MPa or higher; for example, a maximum contact surface pressure of 4,000 MPa or higher). Large vertical stress is repeatedly exerted on the raceway surface of the input/output disk at, for example, three points in the case where three rollers are provided. Also, during the course of power transmission, large shearing stress equivalent to the shearing stress of an oil film is repeatedly exerted on the raceway surface of the input/output disk. Meanwhile, large vertical stress and large shearing stress are repeatedly exerted on the circumferential surface of a roller. Accordingly, as compared with the rolling contact surface of an ordinary rolling bearing on which only vertical stress is mainly exerted, the raceway surface of the input/output disk and the circumferential surface of the roller are under severe contact conditions peculiar thereto. Studies have revealed that under such severe contact conditions, in addition to a dark etching area, which is a general rolling fatigue structure, there arises a white etching area, thereby shortening life. Conceivably, the white etching area arises from stress-induced transformation of retained austenite to martensite in a surface layer.

Thus, high fatigue strength is required for preventing surface damage such as exfoliation which could otherwise accompany the above-mentioned structural change.

In order to satisfy the above requirement, techniques for implementing the following are proposed (refer to, for example, Patent Document 1, claim 1): the surfaces of rollers and the surfaces of input and output disks of a toroidal-type continuously variable transmission have a residual compression stress of 1,000 MPa or more, a microhardness of Hv 750 or more , and a retained austenite content of 10% or less. However, the roller and disk disclosed in Patent Document 1 are manufactured by carburizing or carbo-nitriding respective machined workpieces each having a predetermined shape, and subsequently shot-peening the workpieces (refer to Patent Document 1, claim 2). Accordingly, the art involves increased manufacturing cost.

Patent Document 1: Japanese Patent Application Laid-Open (kokai) No. 2002-188702

DISCLOSURE OF THE INVENTION

PROBLEMS TO BE SOLVED BY THE INVENTION

An object of the present invention for solving the above problems is to provide a rolling, sliding member whose life is extended and which can be manufactured at low cost, a toroidal-type continuously variable transmission using the same. Another object of the invention is to provide a method of manufacturing the rolling, sliding member.

MEANS FOR SOLVING THE PROBLEMS

A rolling, sliding member according to the present invention is formed from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, and has an average grain size of spheroidal carbide of 0.6 $\mu$m or less and a spheroidal carbide content of 6.0% or less as percent area.

The composition of a steel used to form the rolling, sliding member of the present invention, and the average grain size of and the amount, in percent area, of spheroidal carbide of the rolling, sliding member are specified for the following reasons:

C content:

Carbon is solid-solved in the substrate and yields the effect of strengthening martensite, thereby ensuring post-tempering hardness and improving a rolling fatigue life characteristic. When the carbon content is less than 0.9 wt.

%, this effect is not yielded, whereas when the carbon content is in excess of 1.1 wt.%, large carbide is generated, resulting in an impairment in a rolling fatigue life characteristic. A carbon content of 0.95 wt.% to 1.05 wt.% is preferred.

Si content:

Silicon can suppress precipitation of microcarbide in the martensitic structure, thereby suppressing a drop in strength of martensite associated with rolling fatigue. When the silicon content is less than 0.5 wt.%, the effect of suppressing a drop in strength is weak, whereas when the silicon content is in excess of 3 wt.%, toughness drops, and thus rolling fatigue life is shortened. A silicon content of 1.0 wt.% to 2.0 wt.% is preferred.

Mn content:

Manganese can improves hardenability of steel, thereby enhancing toughness of martensite present in the substrate and thus improving hardness and a rolling fatigue life characteristic. When the manganese content is less than 0.05 wt.%, this effect is not yielded, whereas when the manganese content is in excess of 0.5 wt.%, machinability drops considerably. A manganese content of 0.3 wt.% to 0.48 wt.% is preferred.

Cr content:

Chromium can accelerate formation of carbide, and increase (stabilize) a retained austenite by means of lowering the Mf point at which martensitic transformation is completed. When the chromium content is less than 2.0 wt.%, precipitation of carbide becomes slight, whereas when the chromium content is in excess of 5.0 wt.%, precipitation of carbide becomes excessive, resulting in a drop in post-heat-treatment hardness and the shortening of rolling fatigue life. A chromium content of 2.0 wt.% to 3.5 wt.% is preferred.

Mo content:

Molybdenum is solid-solved in the substrate and yields the effect of ensuring post-tempering hardness and improving a rolling fatigue life characteristic. When the molybdenum content is less than 0.05 wt.%, this effect is not yielded, whereas when the molybdenum content is in excess of 0.5 wt.%, this effect is saturated, and cost increases. A molybdenum content of 0.2 wt.% to 0.45 wt.% is preferred.

Average grain size of spheroidal carbide:

When the average grain size of spheroidal carbide is in excess of 0.6 $\mu$m, stress concentrates on spheroidal carbide during the course of rolling contact; therefore, the average grain size is regulated to 0.6 $\mu$m or less. Preferably, the lower limit of the average grain size of spheroidal carbide is 0.2 $\mu$m. When the average grain size of spheroidal carbide is less than 0.2 $\mu$m, wear resistance may deteriorate. An average grain size of spheroidal carbide of 0.4 $\mu$m to 0.6 $\mu$m is preferred.

Percent area of spheroidal carbide:

When the percent area of spheroidal carbide is in excess of 6%, the amount of solid solution of carbon in martensite decreases, and thus the hardness of martensite drops, resulting in the shortening of rolling fatigue life. Therefore, the percent area of spheroidal carbide is regulated to 6% or less. Preferably, the lower limit of the percent area of spheroidal carbide is 0.3%. When the percent area of spheroidal carbide is less than 0.3%, the amount of solid solution of carbon in matrix increases, potentially resulting in the shortening of rolling life. An percent area of spheroidal carbide of 4% to 6% is preferred.

In the rolling, sliding member according to the present invention, a retained austenite content of 10% to 25% is preferred. Retained austenite exhibits the effect of relaxing stress concentration during the course of rolling contact, thereby extending rolling fatigue life. When the retained austenite content is less than 10%, the effect of relaxing stress concentration becomes weak. Being a metastable structure, retained austenite causes a microstructural change over long-term use. Thus, preferably, the upper limit of the retained austenite content is 25%. A retained austenite content of 11% to 21% is preferred.

The toroidal-type continuously variable transmission according to the present invention comprises a disk-like power transmission member having a concave raceway surface on a side surface thereof, and a roller-like power transmission member rolling on the raceway surface of the disk-like power transmission member. The above-mentioned rolling, sliding member according to the present invention serves as at least one of the disk-like power transmission member and the roller-like power transmission member.

The method of manufacturing a rolling, sliding member according to the present invention comprises quenching a workpiece formed into a predetermined shape from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, by means of heating the workpiece to 850°C to 950°C and rapidly cooling the heated workpiece; and tempering the quenched workpiece by means of heating the workpiece to 250°C to 350°C, thereby establishing an average grain size of spheroidal carbide of 0.6 $\mu$m or less and a spheroidal carbide content of 6.0% or less as percent area.

A heating temperature of 850°C to 950°C for quenching and a heating temperature of 250°C to 350°C for tempering are specified for the following reasons. By means of quenching and tempering, at respective temperatures within the above ranges, a test piece formed from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, there can be established an average grain size of spheroidal carbide of 0.6 $\mu$m or less and a spheroidal carbide content of 6.0% or less as percent area. A heating temperature of 860°C to 940°C for quenching and a heating temperature of 260°C to 300°C for tempering are preferred.

EFFECT OF THE INVENTION

The rolling, sliding member of the present invention can be free from generation of a white etching area over long-time use and thus can exhibit long life. The rolling, sliding member of the present invention can be manufactured by merely performing a quenching process and a tempering process, without need to employ carburizing or carbonitriding, and shot peening; thus, manufacturing cost thereof is low.

The toroidal-type continuously variable transmission of the present invention can exhibit long life of a disk-like power transmission member and a roller-like power transmission member.

The method of manufacturing a rolling, sliding member of the present invention enables low manufacturing cost.

BEST MODE FOR CARRYING OUT THE INVENTION

An embodiment of the present invention will next be described in detail with reference to the drawings.

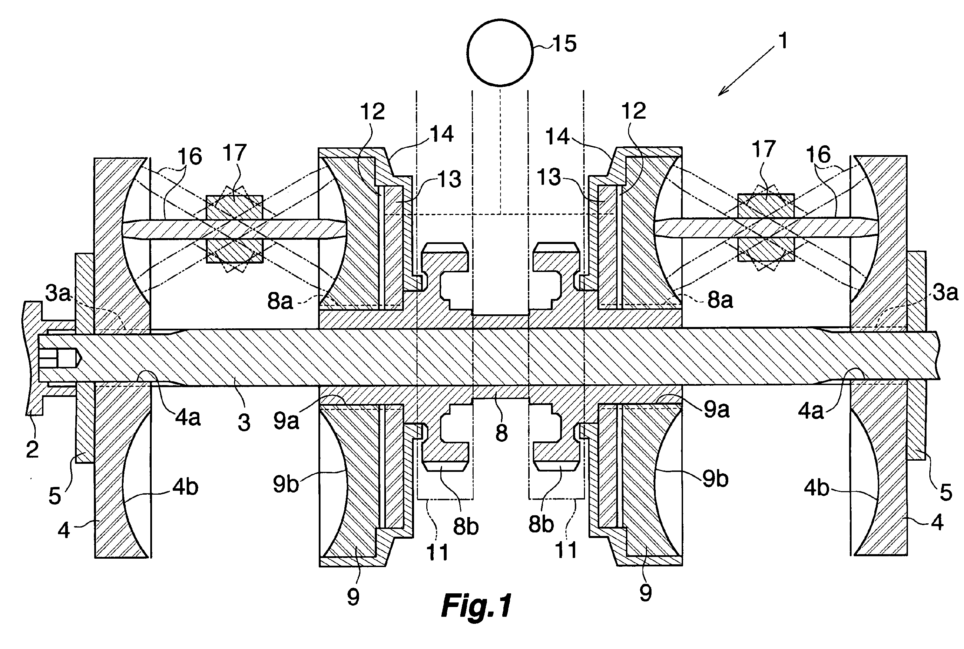

FIG. 1 partially shows a variator of a full-toroidal-type continuously variable transmission, which is a toroidal-type continuously variable transmission that uses the rolling, sliding member of the present invention as disk-like power transmission members and roller-like power transmission members.

In FIG. 1, a variator 1 of the toroidal-type continuously variable transmission has an input shaft 3 which is rotatably driven by a power source 2 of an automobile. An input disk 4 (disk-like power transmission member), which serves as a power transmission member on the input side, is fitted to each of axially opposite end portions of the input shaft 3.

A spline hole 4a is formed at a central portion of each of the input disks 4. An annular, concave raceway surface 4b is formed on an axially inner surface of each of the input disks 4; i.e., on the side surface of the input disk 4 which is oriented toward the other input disk 4, concentrically with the input shaft 3. Spline shaft portions 3a formed on the input shaft 3 are inserted into the corresponding spline holes 4a of the input disks 4, whereby the input disks 4 and the input shaft 3 can rotate unitarily, and the input disks 4 can move to a certain extent in the axial direction of the input shaft 3. A retainer ring 5 is fixed to the input shaft 3 axially outward of each of the input disks 4, thereby preventing the two input disks 4 from moving away from each other.

A tubular output shaft 8 is fitted onto a portion of the input shaft 3 between the two input disks 4 concentrically with the input shaft 3 and in a relatively rotatable manner. The opposite ends of the output shaft 8 are spaced apart by a predetermined distance from the corresponding input disks 4. An output disk 9 (disk-like power transmission member), which serves as a power transmission member, is fitted to each of axially opposite end portions of the output shaft 8.

A spline hole 9a is formed at a central portion of each of the output disks 9. An annular, concave raceway surface 9b is formed on an axially outer surface of each of the output disks 9; i.e., on the side surface of the output disk 9 which is oriented toward the input disk 4, concentrically with the input and output shafts 3 and 8. Spline shaft portions 8a formed on the output shaft 8 are inserted into the corresponding spline holes 9a of the output disks 9, whereby the output shaft 8 and the output disks 9 can rotate unitarily, and the output disks 9 can move to a certain extent in the axial direction of the output shaft 8. The output shaft 8 has toothed belt wheels 8b formed integral therewith at portions located axially inward of the two output disks 9. Power is transmitted to an unillustrated follower via toothed belts 11 wound around the corresponding toothed belt wheels 8b.

A backup plate 13 is disposed on a side of each of the output disks 9 opposite the raceway surface 9b with a clearance 12 present therebetween. Each of the clearances 12 is sealed by means of a casing 14 and unillustrated seal means. Hydraulic pressure is supplied to the clearances 12 from a hydraulic pressure source 15 so as to apply force to the output disks 9 in a direction directed toward the respective opposing input disks 4, thereby imposing a predetermined end load.

The raceway surfaces 4b of the input disks 4 and the raceway surfaces 9b of the output disks 9 which face each other provide respective toroidal clearances therebetween. A plurality of; herein, three, rollers 16 (roller-like power transmission members), which serve as power transmission members, are arranged in each of the toroidal clearances in such a manner as to be equally spaced in the circumferential direction and to come into rolling contact with the raceway surfaces 4b and 9b. Each of the rollers 16 is rotatably supported by a carriage 17. The contact position of each of the rollers 16 on the raceway surfaces 4b and 9b are changed by means of inclination of the carriage 17.

In the above-described variator 1, when force is applied to the output disks 9 in a direction directed toward the corresponding input disks 4 by means of the hydraulic pressure source 15, the rollers 16 in the toroidal clearances come into rolling contact with the raceway surfaces 4b and 9b of the input and output disks 4 and 9 under high load, whereby the input and output disks 4 and 9 are connected together via the rollers 16, thereby transmitting torque from the input shaft 3 to the output shaft 8. At this time, by means of changing the contact positions of the rollers 16 on the raceway surfaces 4b and 9b of the input and output disks 4 and 9 through inclination of the respective carriages 16, the rotational speed of the output disks 9 can be increased or decreased, thereby implementing variable transmission ratio.

In the thus-configured full-toroidal-type continuously variable transmission, at least one of the mutually contacting two members of the input disk 4, the output disk 9 whose raceway surface 9b faces the raceway surface 4b of the input disk 4, and the roller 16 in rolling contact with the raceway surfaces 4b and 9b of the input and output disks 4 and 9; i.e., the input and output disks 4 and 9 and the rollers 16, only the input and output disks 4 and 9, or only the rollers 16, is formed from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, and has an average grain size of spheroidal carbide of 0.6 $\mu$m or less and a spheroidal carbide content of 6.0% or less as percent area.

The above embodiment is described while mentioning a full-toroidal-type continuously variable transmission using the rolling, sliding member according to the present invention. However, needless to say, the rolling, sliding member according to the present invention is also applicable to a half-toroidal-type continuously variable transmission. Particularly, the effect of the present invention is increased in application to a full-toroidal-type continuously variable transmission, in which a contact portion between a disk and a roller has a large spin component.

The rolling, sliding member according to the present invention is also applicable to various rolling, sliding members, such as rolling bearings and one way clutches. Particularly, the rolling, sliding member according to the present invention is favorably used in applications which involve a large vibratory impact; for example, a rolling element and a bearing ring of a rolling bearing for use in an alternator.

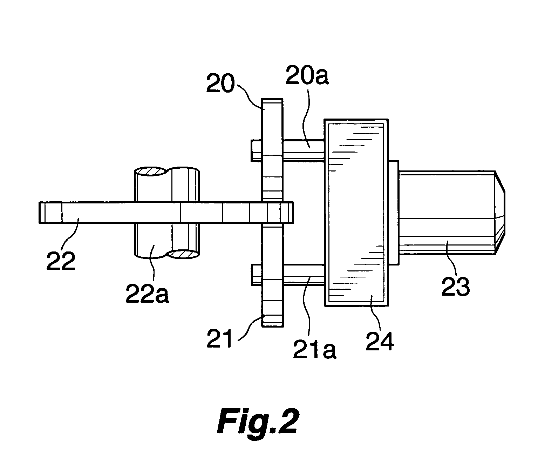

Examples of the present invention and Comparative Examples will next be described with reference to FIG. 2.

Examples 1 to 3 and Comparative Examples 1 to 3:

By use of six kinds of steels having respective compositions shown in Table 1, disk-like test rollers 20 each having a diameter of 58 mm and a thickness of 8 mm, and disks 22 were manufactured by the following method. The steels were lathed to obtain workpieces having a predetermined shape. The workpieces were subjected to a quenching process in which the workpieces were heated at respective temperatures shown in Table 1 for 45 minutes and were then cooled rapidly, a tempering process in which the quenched workpieces were heated at respective temperatures shown in Table 1 for 120 minutes, and a polishing process, whereby the test rollers 20 and the disks 22 were yielded.

[Table 1]

| | Composition (wt.%) | | | | | | Quenching Temp. (°C) | Tempering Temp. (°C) | Spheroidal Carbide | |
|---|---|---|---|---|---|---|---|---|---|---|
| | C | Si | Mn | Cr | Mo | Fe | | | Av. gr. sz. ($\mu$m) | Percent area (%) |
| Example 1 | 1.0 | 1.5 | 0.45 | 2.0 | 0.4 | bal. | 860 | 280 | 0.55 | 5.4 |
| Example 2 | 1.0 | 1.0 | 0.45 | 3.5 | 0.4 | bal. | 900 | 220 | 0.50 | 5.6 |
| Example 3 | 1.0 | 3.0 | 0.45 | 5.0 | 0.4 | bal. | 940 | 260 | 0.60 | 5.2 |
| Com. Ex. 1 | 1.0 | 1.0 | 0.45 | 2.0 | 0.4 | bal. | 860 | 260 | 0.56 | 6.5 |
| Com. Ex. 2 | 1.0 | 3.5 | 0.45 | 2.0 | 0.4 | bal. | 860 | 300 | 0.73 | 5.2 |
| Com. Ex. 3 | 1.0 | 1.0 | 0.45 | 6.0 | 0.4 | bal. | 890 | 220 | 0.62 | 6.7 |

By use of the steel having the composition of Example 1, a disk-like dummy roller 21 having a diameter of 58 mm and a thickness of 8 mm was manufactured by the following method. The steel was lathed to obtain a workpiece having a predetermined shape. The workpiece was subjected to a quenching process in which the workpiece was heated at 850°C for 45 minutes and was then cooled rapidly, a tempering process in which the quenched test piece was heated at 260°C for 120 minutes, and a polishing process, whereby the dummy roller 21 was yielded.

The test rollers 20 were measured for the average grain size of and the amount (percent area) of spheroidal carbide and the retained austenite content at a surface layer portion of the circumferential rolling surface. The measurement is performed in a depth where shearing stress calculated from a maximum contact surface pressure during operation, which will be described later, is maximized.

Next, as shown in FIG. 2, rotating shafts 20a, 21a, and 22a were fixed to the test roller 20, the dummy roller 21, and the disk 22, respectively, at their centers. The resultant assemblies were arranged as follows: the rotating shafts 20a and 21a of the test roller 20 and the dummy roller 21, respectively, lay horizontally and in parallel with each other; the rotating shaft 22a of the disk 22 was vertical; and the rolling surfaces (circumferential surfaces) of the test and dummy rollers 20 and 21 were in rolling contact with the corresponding opposite raceway surfaces of the disk 22 at the same radial position and the same circumferential position. The test and dummy rollers 20 and 21 are rotated at different rotational speeds by a single motor 23 via a speed variator 24, and the test roller 20 slips on the corresponding raceway surface of the disk 22.

Then, by use of clean lubricating oil and under the operating conditions shown in Table 2, the test and dummy rollers 20 and 21 were rotated until exfoliation arose on the rolling surface of the test roller 20.

[Table 2]

| Load | 5.8 kN |
|---|---|
| Maximum contact surface pressure | 4.2 GPa |
| Motor speed | 3,000 rpm |
| Slip ratio | 13% |
| Test temperature | Uncontrolled elevation |
| Lubricant | Traction oil |

After completion of operation, the test roller 20 was measured for the average grain size of and the amount (percent area) of spheroidal carbide and the retained austenite content at the above-mentioned position in a surface layer portion of the circumferential rolling surface.

Next, average grain size variation index X of spheroidal carbide, percent area variation index Y of spheroidal carbide, and stress-induced transformation index Z of retained austenite were obtained by the equations (i) to (iii).

$$\text{Average grain size variation index } X = (A0 - Aa)/(Na - N0) \ldots (i)$$

$$\text{Percent area variation index } Y = (B0 - Ba)/(Na - N0) \ldots (ii)$$

$$\text{Stress-induced transformation index } Z = (\gamma 0 - \gamma a)/(Na - N0) \ldots (iii)$$

where A0: average grain size before start of operation; Aa: average grain size after end of operation; B0: percent area before start of operation; Ba: percent area after end of operation; γ0: retained austenite content before start of operation;

γa: retained austenite content after end of operation; Na: number of iterations of stressing until occurrence of exfoliation; and NO: $10^6$ (number of iterations of stressing at which retained austenite content begins to drop).

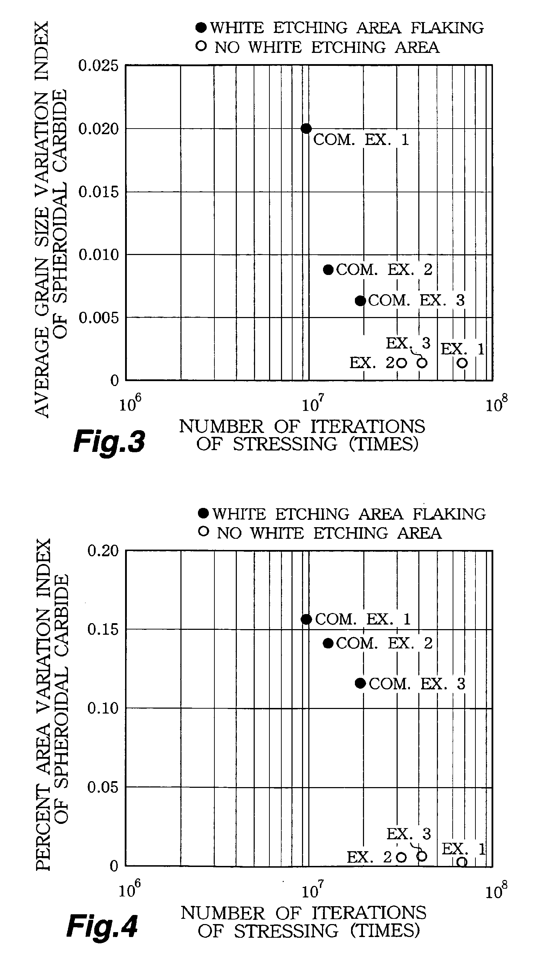

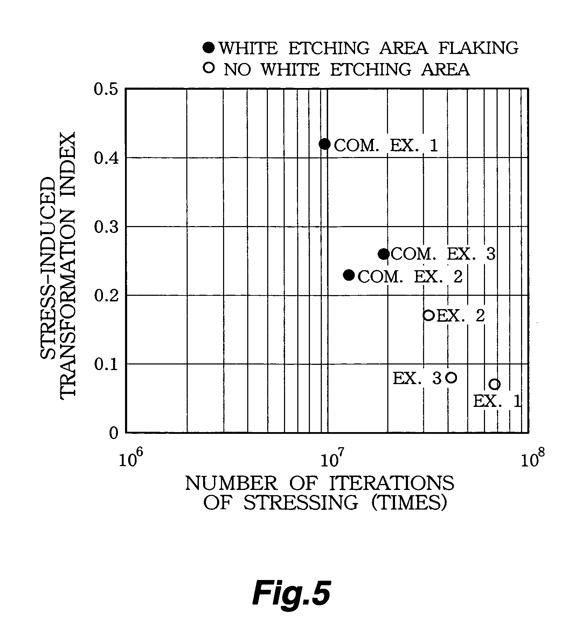

The test results are shown in Table 3 and FIGS. 3 to 5.

[Table 3]

| | Average Grain Size of Spheroidal Carbide | | | Percent area of Spheroidal Carbide | | | Retained Austenite | | | Number of Iterations of Stressing until Exfoliation (times) |
|---|---|---|---|---|---|---|---|---|---|---|
| | A0 (μm) | Aa (μm) | Variation Index X | B0 (%) | Ba (%) | Variation Index Y | γ0 (%) | γa (%) | Transformation Index Z | |
| Example 1 | 0.55 | 0.51 | 0.001 | 5.4 | 5.2 | 0.003 | 11 | 6 | 0.07 | $68.6 \times 10^6$ |
| Example 2 | 0.50 | 0.46 | 0.001 | 5.6 | 5.4 | 0.006 | 15 | 11 | 0.17 | $31.2 \times 10^6$ |
| Example 3 | 0.60 | 0.57 | 0.001 | 5.2 | 4.9 | 0.007 | 21 | 19 | 0.08 | $40.6 \times 10^6$ |
| Com. Ex. 1 | 0.56 | 0.37 | 0.020 | 6.5 | 5.0 | 0.158 | 11 | 7 | 0.42 | $9.5 \times 10^6$ |
| Com. Ex. 2 | 0.73 | 0.63 | 0.008 | 5.2 | 3.4 | 0.141 | 18 | 15 | 0.23 | $12.8 \times 10^6$ |
| Com. Ex. 3 | 0.62 | 0.50 | 0.006 | 6.7 | 4.5 | 0.116 | 21 | 16 | 0.26 | $19 \times 10^6$ |

As is apparent from the test results shown in Table 3 and FIGS. 3 to 5, the test rollers 20 of Examples 1 to 3 exhibit a significantly large number of iterations of stressing until occurrence of flaking as compared with the test rollers 20 of Comparative Examples 1 to 3, indicating that the rolling, sliding member according to the present invention has long life. Observation of the rolling surfaces of the test rollers 20 after end of operation indicated that the test rollers 20 of Examples 1 to 3 were free from generation of a white etching area. By contrast, white-etching-area flaking arose on the test rollers 20 of Comparative Examples 1 to 3.

Also, it can be judged that a rolling, sliding member formed from a steel which exhibits an average grain size variation index X of 0 to 0.005, an percent area variation index Y of 0 to 0.01, and a stress-induced transformation index Z of 0.2 or less as measured after the above-described test has long life.

INDUSTRIAL APPLICABILITY

The rolling, sliding member according to the present invention can be favorably used as, for example, rollers and disks of a toroidal-type continuously variable transmission.

BRIEF DESCRIPTION OF THE DRAWINGS

[FIG. 1] Schematic, longitudinal section showing a variator portion of a full-toroidal-type continuously variable transmission.

[FIG. 2] Schematic view showing arrangement of a test roller, a dummy roller, and a disk used in a test for evaluation of Examples 1 to 3 and Comparative Examples 1 to 3.

[FIG. 3] Graph showing the relation between the average grain size variation index of spheroidal carbide and the number of iterations of stressing.

[FIG. 4] Graph showing the relation between the percent area variation index of spheroidal carbide and the number of iterations of stressing.

[FIG. 5] Graph showing the relation between the stress-induced transformation index of retained austenite and the number of iterations of stressing.

DESCRIPTION OF REFERENCE NUMERALS

4: input disk (disk-like power transmission member)
4b: raceway surface
9: output disk (disk-like power transmission member)
9b: raceway surface
16: roller (roller-like power transmission member)

**Claims**

1. A rolling, sliding member formed from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, and having an average grain size of spheroidal carbide of 0.6 $\mu$m or less and a spheroidal carbide content of 6.0% or less as percent area.

2. A toroidal-type continuously variable transmission comprising a disk-like power transmission member having a concave raceway surface on a side surface thereof, and a roller-like power transmission member rolling on the raceway surface of the disk-like power transmission member, wherein the rolling, sliding member according to claim 1 serves as at least one of the disk-like power transmission member and the roller-like power transmission member.

3. A method of manufacturing a rolling, sliding member, comprising quenching a workpiece formed into a predetermined shape from a steel containing 0.9 wt.% to 1.1 wt.% C, 0.5 wt.% to 3.0 wt.% Si, 0.05 wt.% to 0.5 wt.% Mn, 2.0 wt.% to 5.0 wt.% Cr, and 0.05 wt.% to 0.5 wt.% Mo, the balance being Fe and unavoidable impurities, by means of heating the workpiece to 850°C to 950°C and rapidly cooling the heated workpiece; and tempering the quenched workpiece by means of heating the workpiece to 250°C to 350°C, thereby establishing an average grain size of spheroidal carbide of 0.6 $\mu$m or less and a spheroidal carbide content of 6.0% or less as percent area.

*Fig.1*

**Fig.2**

**Fig.3**

● WHITE ETCHING AREA FLAKING
○ NO WHITE ETCHING AREA

AVERAGE GRAIN SIZE VARIATION INDEX OF SPHEROIDAL CARBIDE

NUMBER OF ITERATIONS OF STRESSING (TIMES)

**Fig.4**

● WHITE ETCHING AREA FLAKING
○ NO WHITE ETCHING AREA

PERCENT AREA VARIATION INDEX OF SPHEROIDAL CARBIDE

NUMBER OF ITERATIONS OF STRESSING (TIMES)

**Fig.5**

<table>
<tr><td colspan="2"><strong>INTERNATIONAL SEARCH REPORT</strong></td><td>International application No.<br>PCT/JP2005/019036</td></tr>
</table>

| A. CLASSIFICATION OF SUBJECT MATTER |
| --- |
| *C22C38/00*(2006.01), *C21D9/00*(2006.01), *C22C38/34*(2006.01),<br>*F16C33/32*(2006.01), *F16C33/62*(2006.01), *F16H15/38*(2006.01) |

According to International Patent Classification (IPC) or to both national classification and IPC

| B. FIELDS SEARCHED |
| --- |
| Minimum documentation searched (classification system followed by classification symbols)<br>*C22C38/00*(2006.01), *C21D9/00*(2006.01), *C22C38/34*(2006.01),<br>*F16C33/32*(2006.01), *F16C33/62*(2006.01), *F16H15/38*(2006.01) |

Documentation searched other than minimum documentation to the extent that such documents are included in the fields searched
Jitsuyo Shinan Koho 1922-1996 Jitsuyo Shinan Toroku Koho 1996-2006
Kokai Jitsuyo Shinan Koho 1971-2006 Toroku Jitsuyo Shinan Koho 1994-2006

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| X | JP 2001-181784 A (NTN Corp.),<br>03 July, 2001 (03.07.01),<br>Full text<br>(Family: none) | 1-3 |
| A | JP 2003-502505 A (SKF ENGINEERING AND<br>RESEARCH CENTRE B.V.),<br>21 January, 2003 (21.01.03),<br>Full text<br>& WO 00/79016 A1 & US 6540847 B1 | 1-3 |
| A | JP 2003-35316 A (Koyo Seiko Co., Ltd.),<br>07 February, 2003 (07.02.03),<br>Full text<br>& EP 1279847 A1 & US 2003/29525 A1 | 1-3 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 January, 2006 (06.01.06) | Date of mailing of the international search report<br>17 January, 2006 (17.01.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 811 052 A1**

| INTERNATIONAL SEARCH REPORT | International application No. |
|---|---|
| | PCT/JP2005/019036 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-150592 A  (NSK Ltd.),<br>27 May, 2004 (27.05.04),<br>Full text<br>(Family: none) | 1-3 |

Form PCT/ISA/210 (continuation of second sheet) (April 2005)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002188702 A